# EUROPEAN PATENT SPECIFICATION

(11) **EP 3 172 351 B1**
(45) Date of publication and mention of the grant of the patent: **10.04.2019**
(21) Application number: 14812287.2
(22) Date of filing: 22.07.2014
(51) Int. Cl.: C23C 24/10, B26D 7/20, B22F 3/105, C04B 41/45, B33Y 80/00, B33Y 10/00

(54) **ADDITIVE LAYER MANUFACTURING OF ANVIL FOR ROTARY CUTTING UNIT**
GENERATIVE SCHICHTFERTIGUNG EINES AMBOSS FÜR ROTIERENDE SCHNEIDEINHEIT
FABRICATION ADDITIVE D'UNE ENCLUME DE COUPE POUR D'UNITÉ DE COUPE ROTATIVE

(43) Date of publication of application: 31.05.2017
(73) Proprietor: Hyperion Materials & Technologies (Sweden) AB, 126 80 Stockholm (SE)
(72) Inventor: SECONDI, Jacques Joseph Philippe, F-38122 Monsteroux-Milieu (FR); DIJON, Pierre-Luc Paul André, 38150 SALAISE SUR SANNE (FR)
(74) Representative: Neilson, Martin Mark
(86) International application number: PCT/IB2014/001697
(87) International publication number: WO 2016/012827

(56) References cited:
- EP-A1- 2 686 146
- EP-A2- 0 900 637
- EP-A2- 1 629 934
- DE-U1-202011 108 659
- US-A- 4 289 055
- S. KHAMENEH ASL ET AL: "The Effect of the Heat Treatment on Residual Stresses in HVOF Sprayed WC-Co Coating", MATERIALS SCIENCE FORUM, vol. 465-466, 2004, pages 427-432, XP055165813, DOI: 10.4028/www.scientific.net/MSF.465-466.427

## Description

### TECHNICAL FIELD

The present invention relates to a method of making an anvil of a rotary cutting unit having at least a portion of an outer surface thereof clad with a wear resistant material.

### BACKGROUND

Anvils for rotary cutters can be made of for example solid tool or high speed steel (HSS), a ring of HSS or tool steel mounted on a shaft made from a low or medium carbon steel, a ring of HSS or tool steel mounted on a hollow shaft through welding or other fixing methods (screws, shrink-fit, adhesives, etc.), a ring of HSS mounted on two separate shaft ends that are attached by welding, brazing, shrink-fitting, screw and/or adhesive, a ring of HSS or tool steel mounted directly on ball or roller bearings, or a ring of HSS or tool steel that is pushed by rollers against the rotary cutter.

One problem with the above anvils is the amount of noble and/or high price material needed. For instance, a solid anvil can weigh from 20 to 150 kg, creating a major material expense, while only a layer of for example, steel, is needed in the working areas of the anvil.

The situation is worse for a tool steel or HSS ring, as to manufacture such it is necessary to start with a solid round bar that is bored in its center in order to create the ring. In the case of high speed steel, there is also the problem of availability of the round materials, as such are frequently not offered for large diameters, for example, above 250 mm.

In the case of tubes, the lead-times for specific productions are very long (6 to 8 months) and are not compatible with the high reactivity requested by the market. Moreover, after continuous use it is necessary to regrind the anvil. However, after a certain number of grindings, the anvil can no longer be used. Thus, there is a need to recycle used anvils by resurfacing the working areas of the same.

EP0900637 A2 discloses a rotary cutoff apparatus for cutting fiberboard sheets having a knife cylinder and an anvil coated with a coating layer. EP1629934 A2 discloses a cutting knife deposited in several layers successively on top of each other by laser cladding on a cutting roller. US4289055 A discloses a rotatable anvil used in the paper industry and a method for making the anvil, in order to reduce uneven wear of the anvil.

### SUMMARY

In one embodiment a method according to the present invention includes the steps of providing a shaft, the shaft having an outer surface, applying a wear resistant powder material to at least one portion of the outer surface, and heating the wear resistant powder material to fuse it into at least one layer on the at least one portion of the outer surface, and further comprising the step of machining a plurality of apertures in the shaft to reduce its weight.

Further disclosed is an anvil for a rotary cutting unit includes a shaft having an outside surface and at least one cladded layer applied to at least one portion of the outside surface of the shaft.

Further disclosed is a rotary cutting unit includes a rotary cutter rotatably disposed on a frame and an anvil mounted on the frame. The anvil includes a shaft having an outside surface and at least one cladded layer applied to at least one portion of the outside surface of the shaft.

The foregoing summary, as well as the following detailed description of the embodiments, will be better understood when read in conjunction with the appended drawings. It should be understood that the embodiments depicted are not limited to the precise arrangements and instrumentalities shown.

### BRIEF DESCRIPTION OF THE DRAWINGS

Fig. 1 is a perspective view of a rotary cutting unit.
Fig. 2 is a perspective view of an anvil.
Fig. 3 is a cross-sectional view of another anvil.
Fig. 4 is a perspective view of still another anvil.
Fig. 5 is a perspective view of yet another anvil.
Fig. 6 is a cross-sectional view of another anvil.
Fig. 7 is flow diagram of part of the method of the present invention.

### DETAILED DESCRIPTION

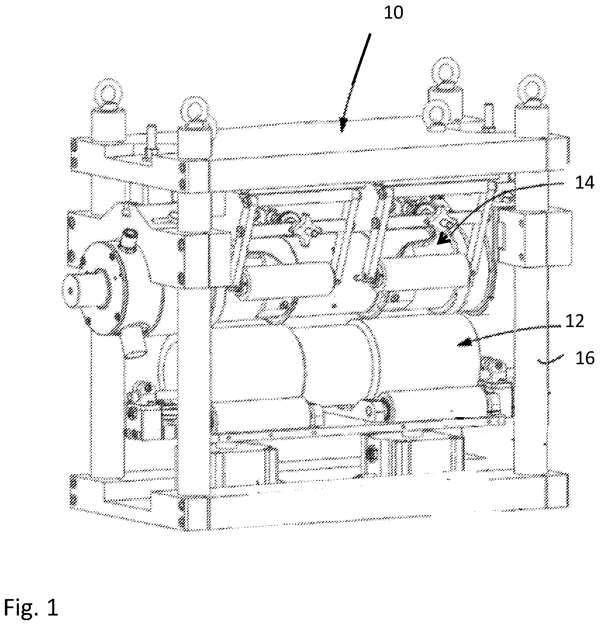

Typically rotary cutting apparatuses include a rotary cutter and an anvil. As shown in Fig. 1, a cutting unit 10 has an anvil 12 that cooperates with cutting zones of a rotary cutter 14 rotatably disposed in a frame 16. It should be appreciated that anvil 12 can be rotated or stationary. Moreover, anvil 12 can be disposed above rotary cutter 14 in the frame.

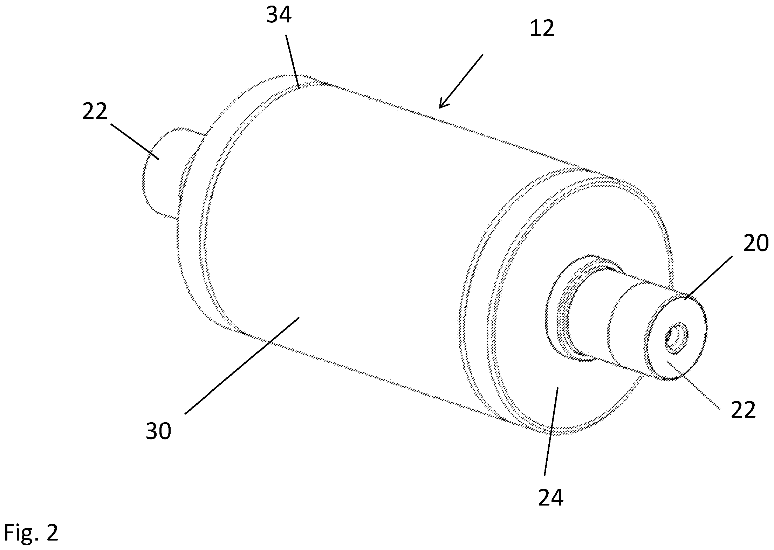

Fig. 2 shows a first embodiment of an anvil 12 according to the present disclosure. Anvil 12 includes shaft 20 made of steel, for example, a low carbon steel (typically 15CrMo5 or 20MnCr5) that would be case-hardened, carburized or carbo-nitrurized; a quenched and tempered medium carbon steel (by example 30CrNiMo8 or 45NiCrMo16); or possibly a heat-treated stainless steel (by example 17-4PH). Alternatively, shaft 20 can be made of a tool steel, such as 40CrMnMo8, 55NiCrMoV7, 90MnCrV8, 100Cr6 or even a D2 steel. Some of these steels can be found pre-hardened or are quenched and tempered based on requirements.

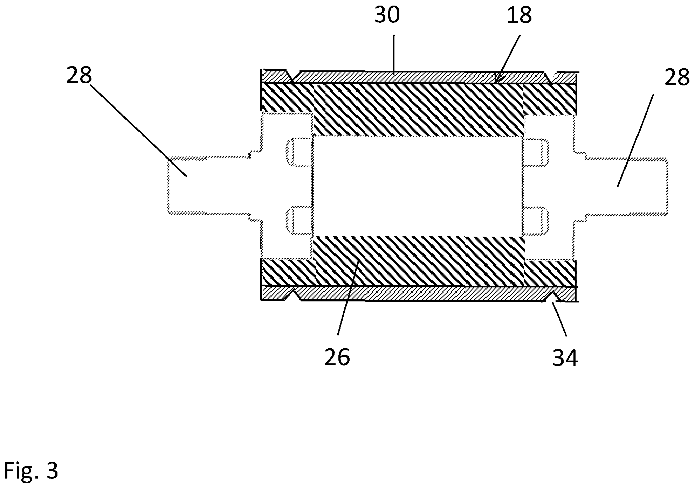

Shaft 20 has opposed ends 22 that are hard enough to support roller bearings or ball bearings (not shown) for rotatably supporting the same in the cutting unit. A cylinder 24 made of low or medium carbon steel can be shrink-fitted on shaft 20. Alternatively, as shown in Fig. 3, the shaft can be a hollow shaft 26 with shaft ends 28 attached thereto via fixtures, such as screws, shrink fitting, press fitting, welding, brazing or a combination of processes. Shaft ends 28 can be made of quenched steel or any other material that is hard enough to support roller bearings or ball bearings (not shown) to mount the anvil in the cutting unit.

As shown in Figs 2 and 3, cylinder 24 or shaft 26 can be the base for at least one cladded layer 30 made of a wear-resistant material with a hardness comprised between 55 and 70 HRC. As will be fully described further herein, the layer of wear resistant powder material or a wire of pre-alloyed material is cladded on the outer surface 18 of cylinder 24 or shaft 26. As used herein a pre-alloyed material is a material that is prepared and alloyed before being atomized as a powdered material or before being extruded or drawn in the shape of a wire. Thus, most of the material's phases exist before it is cladded on the anvil, but some diffusion phenomena and metallurgical transformations will continue to occur during the process.

The composition of the material of the cladded layer can be mainly based on nickel. Chromium, vanadium and titanium can be added from 0 to 20% in weight. For example, a Ni-based alloy with the composition in weight % of Cr -15%; Fe-4%; Si - 4.25%; B - 3%; Co-7% and the balance of Ni would reach 60 HRC and be fully dense. Another example, could be Ni; Cr-17%; Si-4%; Fe-4%; B-3.5% and C-1%. Both of which are commercially available.

The components can be present in a metallic form, alloyed or not, or combined with carbon in carbide phases. Iron, silicon, boron, manganese, copper, aluminum, molybdenum, tungsten, tantalum and niobium can be added in the range of 0 to 8 % in weight and can be present in a metallic form, alloyed or not, or combined with carbon in carbide phases. Carbon is present in the range of 0.1 to 2 % in solid solution or in carbide phases.

As used herein, the term "cladded" or "cladding" refers to the process of depositing material by which a powdered or wire feedstock material is melted and consolidated by use of a laser, electrical arc, plasma arc, induction plasma, high velocity oxygen fuel (HVOF) or even a simple flame as a heating source, in order to coat a surface with the applied material.

Optional features can be ground or machined on the cladded layer 30, for example, grooves 34 can be provided to prevent oil contamination on trailing surfaces when the anvil is driven by the rotary cutter.

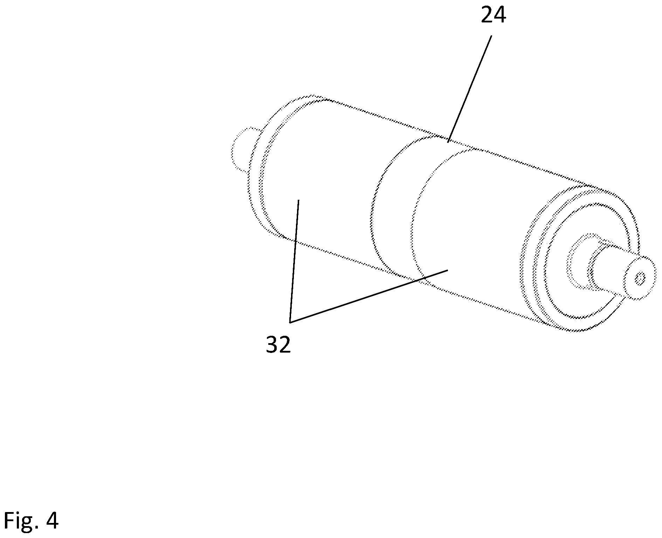

Cladded layer 30 can be applied to the entire outer surface 18 of cylinder 24 or shaft 28 as shown in Figs. 2 and 3. Alternatively, as shown in Fig. 4, cladded layer 30 can be applied to preselected working areas 32 of the shaft or cylinder. Thus, the use of the wear resistant material can be limited to particular areas of the anvil with non-cutting areas being free of cladding.

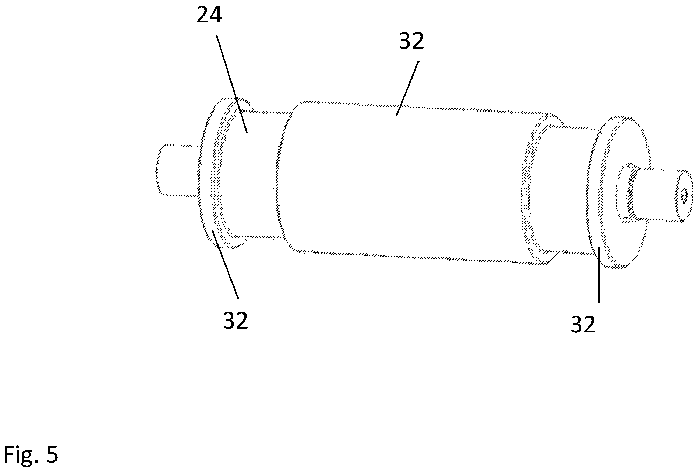

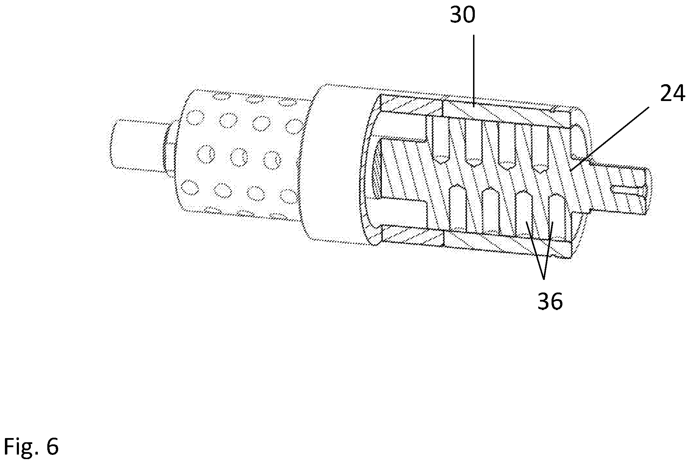

Referring to the embodiment of Fig. 5, a central and two side areas 32 can be cladded with the wear resistant material with the remaining portions of cylinder 24 being free of the wear resistant material. Moreover, as shown in Fig. 6, shaft 28 is made lighter through machining operations, such as providing a plurality of apertures 36 therein prior to cladding.

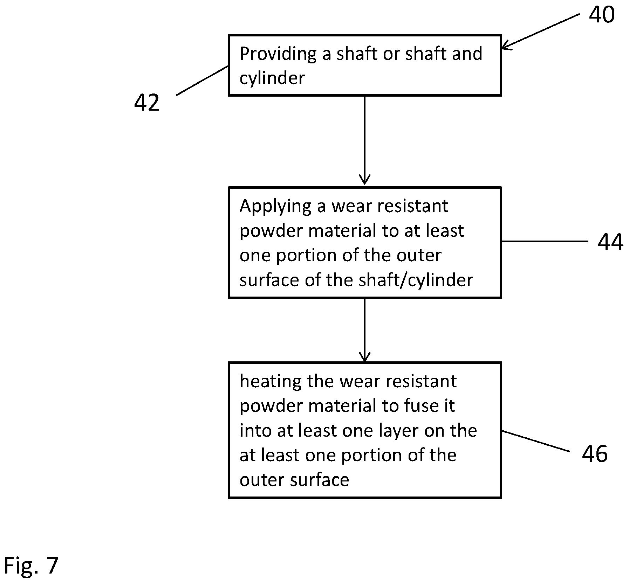

As described above, the method of the present invention can be used to produce an anvil for a rotary cutting unit wherein the wear resistant material is used only where it is needed and the base shaft can be reused. Referring to Fig. 7, a method 40 comprises the step 42 of providing a shaft, for example, shaft 20 that includes cylinder 24 or hollow shaft 26. The shaft has a cylindrical outer surface. The shaft is preferably medium or low carbon steel, but tool steel could also be used.

In step 44 a wear resistant powder material is applied to at least one portion of the outer surface. As described above, the wear resistant material can be a powder or a wire. It is made of a wear-resistant and tough material, for instance a Ni-based alloy as described above or a pre-alloyed material. Alternatively, the wear resistant material could be supplied in the shape of a pre-alloyed wire in the case of steels. The wear resistant material is sprayed and simultaneously heated at the outer surface of the shaft in step 46 to fuse it into at least one layer on the at least one portion of the outer surface, using for example, an additive layer manufacturing (ALM) method.

ALM is used to deposit material by using a laser beam to melt a metallic material and fuse the same on a base structure. By applying subsequent layers, one on top of each other, a structural component can be created. The pulses of the laser can control the thickness and width of the layer.

As described above, the wear resistant material can be applied at predetermined positions on outer surface of the shaft by directing the wear resistant material and heat source, for example, a laser, at the desired locations on the anvil shaft.

It should be appreciated that hard facing and other technology can be used to form the layers. A laser, plasma, HVOF or electrical arc or a simple flame can be used as a heating source.

Starting powder and cladding parameters can be controlled in order to improve the microstructure. Parameters such as heating power, material's flow rate, distance to the surface, impact speed and deposition speed are key to control quality (cracks, pores, oxide content). Additional features like protective gas, and pre-heating of the shaft can be used to control the layer's quality. The protective gas can be supplied directly in the gaseous form or can be obtained from precursors that are present in the powder or in the cored wire. It should be appreciated that other features can be used and the present disclosure is not limited to these specifically, but it should be understood to include those known to one with ordinary skill.

Regarding the starting powder, the control of size distribution can be adapted to the deposition process. Regarding wire, its diameter needs to be appropriate for the process. Further, in the case where macro-pores or micro-pores or such are revealed by grinding, this would affect the cut. For example, some types of anvils are used to cut different type of non-wovens. Some of these are made of fibers as thin as 10 µm and the presence of pores would prevent the cutting pressure from being applied thereto.

The thickness of the cladded layer(s) can vary from 0.5 to 15 mm. At the higher thicknesses it is usually required to clad several layers of the wear-resistant material to reach such thickness.

Depending on the cladded material, it can be also important to have complementary appropriate heat treatments, in order to guarantee metallurgical quality and dimensional stability (for instance tempering operations).

A finishing operation, typically grinding, can be performed on the cladded layer(s) to perfect the geometry thereof. Grooves or other features can be formed thereon, as discussed above.

It should be appreciated that the method of the present invention could be used to clad layers to form a tube and then the tube mounted on the shaft or cylinder by shrink fitting or other method.

Forming an anvil with an ALM process, as described above, offers significant advantages. For example, the noble, wear resistant material is used only where it is needed and the base shaft can be reused, i.e., when the anvil has been used and cannot be cut anymore, the shaft/cylinder can be reground to refresh the surface and allow further use. Thus the anvil can be reground several times until the layer of noble wear resistant material is completely removed. Thereafter, it is possible to re-clad the shaft, grind it and to give it a new use life.

Although the present embodiment(s) has been described in relation to particular aspects thereof, many other variations and modifications and other uses will become apparent to those skilled in the art. It is preferred therefore, that the present embodiment(s) be limited not by the specific disclosure herein, but only by the appended claims.

## Claims

1. A method of producing an anvil for a rotary cutting unit comprising the steps of:
providing a shaft, the shaft having an outer surface;
applying a wear resistant powder material to at least one portion of the outer surface; and
heating the wear resistant powder material to fuse it into at least one layer on the at least one portion of the outer surface;
**characterized by** further comprising the step of machining a plurality of apertures in the shaft to reduce its weight.

2. The method according to claim 1, wherein the shaft is made of a material selected from the group of low carbon steel, medium carbon steel and tool steel.

3. The method according to any of the preceding claims, wherein the wear resistant powder material is selected from the group of tool steel powder, high speed stool powder and cemented carbide powder.

4. The method according to any of the preceding claims, wherein the step of heating the wear resistant powder material comprises applying a laser beam to melt and fuse the wear resistant powder material to the at least one portion of the outer surface of the shaft.

5. The method according to any of the preceding claims, wherein the wear resistant powder material is a mixture of powders.

6. The method according to claims 1-3, wherein the wear resistant material is a wire of pre-alloyed powder material and the heating step comprises supplying an electrical arc to melt the pre-alloyed powder material and fuse it into the at least one layer.

7. The method according to any of the preceding claims, wherein the at least one layer has a thickness of 0.5 to 15 mm.

8. The method according to any of the preceding claims, wherein at least two layers are applied successively one on top of each other.

9. The method according to any of the preceding claims, wherein the at least one layer includes at least one groove machined therein.

10. The method according to any of the preceding claims, wherein the at least one layer is disposed on a plurality of working portions of the shaft.

11. The method according to any of the preceding claims, further comprising the step of heating the shaft after forming the at least one layer on the at least one portion thereof.

12. The method according to any of the preceding claims, further comprising the step of machining the at least one layer fused on the outer surface of the shaft.

## Patentansprüche

1. Verfahren zur Herstellung eines Ambosses für eine Drehschneideeinheit, die Schritte umfassend:
Bereitstellen einer Welle, wobei die Welle eine Außenfläche aufweist;
Auftragen eines verschleißbeständigen Pulvermaterials auf zumindest einen Abschnitt der Außenfläche; und
Erhitzen des verschleißbeständigen Pulvermaterials, um es in zumindest eine Schicht auf dem mindestens einen Abschnitt der Außenfläche zu sintern;
**gekennzeichnet durch** darüber hinaus den Schritt eines Bearbeitens von mehreren Öffnungen in der Welle, um ihr Gewicht zu verringern, umfassend.

2. Verfahren nach Anspruch 1, wobei die Welle aus einem Material ausgebildet ist, welches ausgewählt ist aus der Gruppe Stahl mit geringem Kohlenstoffgehalt, Stahl mit mittlerem Kohlenstoffgehalt und Werkzeugstahl.

3. Verfahren nach einem der vorhergehenden Ansprüche, wobei das verschleißbeständige Pulvermaterial ausgewählt ist aus der Gruppe Werkzeugstahlpulver, Hochgeschwindigkeitsstahlpulver und Hartmetallpulver.

4. Verfahren nach einem der vorhergehenden Ansprüche, wobei der Schritt des Erhitzens des verschleißbeständigen Pulvermaterials ein Aufbringen eines Laserstrahls umfasst, um das verschleißbeständige Pulvermaterial zu schmelzen und auf den mindestens einen Abschnitt der Außenfläche der Welle zu sintern.

5. Verfahren nach einem der vorhergehenden Ansprüche, wobei das verschleißbeständige Pulvermaterial ein Gemisch von Pulvern ist.

6. Verfahren nach einem der Ansprüche 1-3, wobei das verschleißbeständige Material ein Draht eines vorlegierten Pulvermaterials ist, und wobei der Erhitzungsschritt ein Bereitstellen eines elektrischen Lichtbogens umfasst, um das vorlegierte Pulvermaterial zu schmelzen und in die mindestens eine Schicht zu sintern.

7. Verfahren nach einem der vorhergehenden Ansprüche, wobei die mindestens eine Schicht eine Dicke von 0,5 bis 15 mm aufweist.

8. Verfahren nach einem der vorhergehenden Ansprüche, wobei mindestens zwei Schichten nacheinander eine auf die Oberseite der jeweils anderen aufgebracht werden.

9. Verfahren nach einem der vorhergehenden Ansprüche, wobei die mindestens eine Schicht mindestens eine darin eingearbeitete Vertiefung aufweist.

10. Verfahren nach einem der vorhergehenden Ansprüche, wobei sich die mindestens eine Schicht auf mehreren Arbeitsabschnitten der Welle befindet.

11. Verfahren nach einem der vorhergehenden Ansprüche, darüber hinaus den Schritt des Erhitzens der Welle nach einem Ausbilden der mindestens einen Schicht auf dem mindestens einen Abschnitt davon umfassend.

12. Verfahren nach einem der vorhergehenden Ansprüche, darüber hinaus den Schritt eines Bearbeitens der mindestens einen Schicht, welche auf die Außenfläche der Welle gesintert ist, umfassend.

## Revendications

1. Procédé pour produire une enclume pour une unité de coupe rotative comprenant les étapes consistant à :
prévoir un arbre, l'arbre ayant une surface externe ;
appliquer un matériau en poudre résistant à l'usure sur au moins une partie de la surface externe ; et
faire chauffer le matériau en poudre résistant à l'usure pour le faire fondre dans au moins une couche sur au moins une partie de la surface externe ;
**caractérisé en ce qu'**il comprend en outre l'étape consistant à usiner une pluralité d'ouvertures dans l'arbre afin de réduire son poids.

2. Procédé selon la revendication 1, dans lequel l'arbre est réalisé avec un matériau sélectionné dans le groupe comprenant l'acier à faible teneur en carbone, l'acier à moyenne teneur en carbone et l'acier à outil.

3. Procédé selon l'une quelconque des revendications précédentes, dans lequel le matériau en poudre résistant à l'usure est sélectionné dans le groupe comprenant la poudre d'acier à outil, la poudre de plaque de coulée à coupe rapide et la poudre d'acier cémenté.

4. Procédé selon l'une quelconque des revendications précédentes, dans lequel l'étape consistant à faire chauffer le matériau en poudre résistant à l'usure comprend l'étape consistant à appliquer un faisceau laser pour faire fondre et fusionner le matériau en poudre résistant à l'usure sur l'au moins une partie de la surface de l'arbre.

5. Procédé selon l'une quelconque des revendications précédentes, dans lequel le matériau en poudre résistant à l'usure est un mélange de poudres.

6. Procédé selon les revendications 1 à 3, dans lequel le matériau résistant à l'usure est un fil de matériau en poudre pré-allié et l'étape de chauffage comprend l'étape consistant à fournir un arc électrique pour faire fondre le matériau en poudre pré-allié et le fusionner dans l'au moins une couche.

7. Procédé selon l'une quelconque des revendications précédentes, dans lequel l'au moins une couche a une épaisseur de 0,5 à 15 mm.

8. Procédé selon l'une quelconque des revendications précédentes, dans lequel au moins deux couches sont appliquées successivement l'une au-dessus de l'autre.

9. Procédé selon l'une quelconque des revendications précédentes, dans lequel l'au moins une couche comprend au moins une rainure usinée en son sein.

10. Procédé selon l'une quelconque des revendications précédentes, dans lequel l'au moins une couche est disposée sur une pluralité de parties de travail de l'arbre.

11. Procédé selon l'une quelconque des revendications précédentes, comprenant en outre l'étape consistant à faire chauffer l'arbre après avoir formé l'au moins une couche sur l'au moins une de ses parties.

12. Procédé selon l'une quelconque des revendications précédentes, comprenant en outre l'étape consistant à usiner l'au moins une couche fusionnée sur la surface externe de l'arbre.
